# EUROPÄISCHE PATENTSCHRIFT

(11) **EP 1 927 026 B1**
(45) Veröffentlichungstag und Bekanntmachung des Hinweises auf die Patenterteilung: **26.01.2011**
(21) Anmeldenummer: 06793004.0
(22) Anmeldetag: 25.08.2006
(51) Int. Cl.: G02B 21/00

(54) **KONFOKALMIKROSKOP UND VERFAHREN ZUR DETEKTION MIT EINEM KONFOKALMIKROSKOP**
CONFOCAL MICROSCOPE AND METHOD FOR DETECTING BY MEANS OF A CONFOCAL MICROSCOPE
MICROSCOPE CONFOCAL ET PROCEDE POUR DETECTER UN MICROSCOPE CONFOCAL

(30) Priorität: 09.09.2005 DE 102005042890
(43) Veröffentlichungstag der Anmeldung: 04.06.2008
(73) Patentinhaber: Leica Microsystems CMS GmbH, 35578 Wetzlar (DE)
(72) Erfinder: SEYFRIED, Volker, 69226 Nussloch (DE); SCHREIBER, Frank, 69221 Heidelberg (DE)
(74) Vertreter: Schaumburg, Thoenes, Thurn, Landskron, Eckert
(86) Internationale Anmeldenummer: PCT/EP2006/065667
(87) Internationale Veröffentlichungsnummer: WO 2007/028725

(56) Entgegenhaltungen:
- WO-A-88/08550
- WO-A-2004/051341
- DE-A1- 19 654 207
- US-A- 5 192 980

## Beschreibung

Die Erfindung betrifft ein Konfokalmikroskop. Im Besonderen betrifft die Erfindung ein Konfokalmikroskop mit mindestens einer Lichtquelle, die einen Beleuchtungslichtstrahl emittiert, der durch die Optik hindurch über eine Scaneinrichtung eine Probe punkt- bzw. zeilenweise beleuchtet. Ferner ist eine Detektionslochblende vorgesehen, die in einem von der Probe ausgehenden Lichtstrahl angeordnet ist. Ferner umfasst das Konfokalmikroskop ein dispersives Element, das den von der Probe ausgehenden Detektionslichtstrahl räumlich spektral aufspaltet, um für eine Detektoroptik einen spektral aufgespalteten Detektionslichtstrahl zu erzeugen, die diesen auf einen Photosensor-Chip abbildet, wobei die Detektionslochblende in Richtung des Detektionslichtstrahls vor dem dispersiven Element angeordnet ist.

Ferner betrifft die Erfindung ein Verfahren zur Detektion mit einem Konfokalmikroskop.

Das U.S. Patent 6,038,023 offenbart ein System zur Fluoreszenzdetektion oder Fluoreszenzspektroskopie. Das von eine Probe kommende Licht wird dabei mittels eines Prismas spektral aufgespalten und auf ein Detektorarray gerichtet.

Ebenso offenbart die deutsche Offenlegungsschrift DE 101 02 033 ein Scanmikroskop zur gleichzeitigen Detektion mehrerer Spektralbereiche eines Lichtstrahls. Im Strahlengang des Lichtstrahls ist ein Element zum spektralen Auffächern vorgesehen. Dem Element ist ein Mehrkanal-Photomultiplier bzw. ein Detektorarray nachgeschaltet. Hinzu kommen Fokussiermittel, die zur Abbildung des ausgefächerten Lichtstrahls auf den Mehrkanal-Photomultiplier einstellbar sind. Die Fokussiermittel sind unmittelbar vor dem Detektorarray angeordnet.

WO 2004/051341 A1 offenbart ein Rastermikroskop zum Abbilden eines Objekts. Das Rastermikroskop hat eine Lichtquelle, ein nahezu stufenlos variabel einstellbares spektral selektives Element und eine nahezu stufenlos variabel einstellbare spektral selektive Detektionseinrichtung.

US 5,192,980 A US offenbart ein optisches Scanmikroskop zum spektral aufgelösten Erfassen von Licht, das von einer Probe emittiert, reflektiert oder an der Probe gestreut wurde. Ein spektral auflösendes Element ist in einen Detektionsarm des Mikroskops integriert.

WO 88/08550 A1 offenbart ein konfokales Laser-Scanmikroskop, das keine bewegten Teile hat und das Echtzeitbilder darstellt. Das Abbild des Laserspots auf der Probe ist auf eine Photokathode eines Elektronenbildzerlegers fokussiert, dessen Elektronenbildabweichung mit dem Scanner des Mikroskops synchronisiert ist.

DE 196 54 207 A1 offenbart eine TV-Kamera für mikroskopische oder makroskopische Abbildungen. Die Kamera umfasst eine konfokale Optik, eine Laserlichtquelle, einen Scanner, einen Detektor und eine Steuerelektronik.

Der Erfindung liegt die Aufgabe zugrunde ein Konfokalmikroskop zu schaffen, mit dem optimale Detektionsergebnisse erzielt werden, bei der Verwendung eines Photosensor-Chips als Detektionselement.

Die Aufgabe wird gelöst durch ein Konfokalmikroskop, das die Merkmale des Anspruchs 1 umfasst.

Zusätzlich liegt der Erfindung die Aufgabe zugrunde ein Verfahren zu schaffen, mit dem die Detektion mit einem Konfokalmikroskop verbessert wird.

Die objektive Aufgabe wird durch ein Verfahren gelöst, das die Merkmale des Patentanspruchs 11 aufweist.

Das Konfokalmikroskop ist von Vorteil, wenn es mindestens eine Lichtquelle besitzt, die einen Beleuchtungslichtstrahl emittiert. Der Beleuchtungslichtstrahl leuchtet durch die Optik hindurch über eine Scaneinrichtung eine Probe punkt- bzw. zeilenweise. Es ist eine Detektionslochblende vorgesehen, die vor einem dispersiven Element angeordnet ist. Das dispersive Element spaltet den von der Probe ausgehenden Detektionslichtstrahl räumlich auf. Vor einem Photosensor-Chip ist eine Detektoroptik vorgesehen, die den spektral aufgespaltenen Detektionslichtstrahl auf den Photosensor-Chip abbildet. Zusätzlich ist im Detektionslichtstrahl eine Aufweitungsoptik vorgesehen, die ebenfalls vor dem dispersiven Element angeordnet ist. Die Aufweitungsoptik ist dabei derart ausgebildet, dass die numerische Apertur der Detektoroptik unabhängig von der numerischen Apertur des Detektionslichtstrahls an der Detektionslochblende ist. Es existieren zwei vorteilhafte Anordnungen der Aufweitungsoptik. Bei der ersten Anordnung ist die Aufweitungsoptik in Richtung des Detektionslichtstrahls der Detektionslochblende nachgeordnet. Bei einer zweiten Ausgestaltung ist die Aufweitungsoptik in Richtung des Detektionsstrahls vor der Detektionslochblende angeordnet.

Für die Aufweitungsoptik existieren ebenfalls mehrere Ausgestaltungen. So kann z.B. die Aufweitungsoptik als Zoomoptik ausgestaltet sein. Ebenso ist es denkbar, dass die Aufweitungsoptik aus mehreren unterschiedlichen Aufweitungsoptiken besteht, die auf einem revolverähnlichen Gebilde angeordnet sind, so dass je nach Abbildungsbedingungen unterschiedliche Aufweitungsoptiken in den Strahlengang des Detektionslichtstrahls geschwenkt werden können. Das Verändern der Zoomoptik bzw. das Einschwenken der unterschiedlichen Aufweitungsoptiken in den Detektionslichtstrahl kann ebenfalls motorisch erfolgen.

Das Verfahren zur Detektion mit einem Konfokalmikroskop ist vorteilhafterweise mit den Schritten ausgestattet, dass eine Probe mit mindestens einer Lichtquelle durch eine Optik hindurch mittels einer Scaneinrichtung punkt- bzw. zeilenweise beleuchtet wird; dass ein von der Probe ausgehender Detektionslichtstrahl über eine Detektionslochblende auf ein dispersives Element gerichtet wird, wobei der von der Probe ausgehende Detektionslichtstrahl räumlich aufgespalten wird, dass der spektral aufgespaltene Detektionslichtstrahl von einer Detektoroptik auf einen Photosensor-Chip abgebildet wird, und dass eine Aufweitungsoptik vor dem dispersiven Element im Detektionslichtstrahl vorgesehen wird, über die die numerische Apertur der Detektoroptik unabhängig von der numerischen Apertur des Detektionslichtstrahls an der Detektionslochblende eingestellt wird.

Weitere vorteilhafte Ausgestaltungen der Erfindung können den Unteran sprüchen entnommen werden.

In der Zeichnung ist der Erfindungsgegenstand schematisch dargestellt und , wird anhand der Figuren nachfolgend beschrieben. Dabei zeigen:
- Fig. 1: eine schematische Darstellung eines Scanmikroskops mit einem Photosensor-Chip zum Aufnehmen der Signale aus dem Detektionslicht;
- Fig. 2: eine schematische Detailansicht einer ersten Ausfüh- rungsform der Anordnung der Aufweitungsoptik im Detek- tionslichtstrahl;
- Fig. 3: eine schematische Detailansicht einer zweiten Ausfüh- rungsform der Anordnung der Aufweitungsoptik im Detek- tionslichtstrahl;
- Fig. 4: eine schematische Darstellung der Aufweitungsoptik als Zoomoptik in Verbindung mit Stellelementen und einem Computer zur Einstellung des Zooms;
- Fig. 5: eine schematische Ansicht einer Aufweitungsoptik aus mehreren unterschiedlichen Aufweitungsoptiken; und
- Fig.6: eine schematische Darstellung einer Ausführungsform eines Photosensor-Chips.

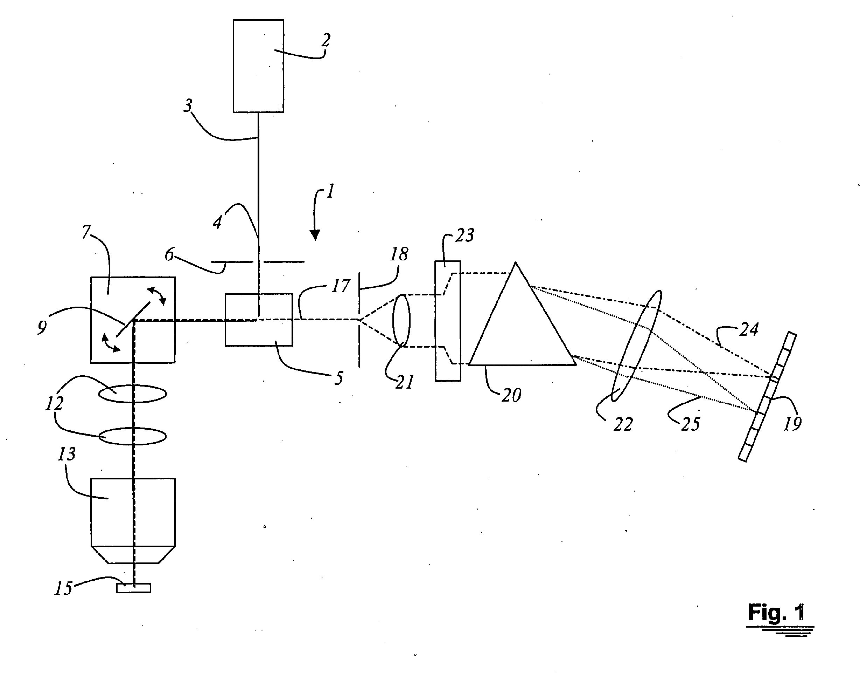

Fig. 1 zeigt den schematischen Aufbau eines konfokalen Scanmikroskops 1, bei dem ein Photosensor-Chip 19 zur Detektion der Signale vom Scanmikroskop 1 herangezogen wird. Der von mindestens einem Beleuchtungssystem 2 kommende Beleuchtungslichtstrahl 3 wird von einem Strahlteiler oder einem geeigneten Umlenkmittel 5 zu einer Scaneinrichtung 7 geleitet. Bevor der Beleuchtungslichtstrahl 3 auf das Umlenkmittel 5 trifft, passiert dieser ein Beleuchtungspinhole 6. Die Scaneinrichtung 7 umfasst einen kardanisch aufgehängten Scanspiegel 9, der den Beleuchtungslichtstrahl 3 durch eine Scanoptik 12 und eine Mikroskopoptik 13 hindurch über bzw. durch ein Objekt 15 führt. Der Beleuchtungslichtstrahl 3 wird bei nicht transparenten Objekten 15 über die Objektoberfläche geführt. Bei biologischen Objekten 15 (Präparaten) oder transparenten Objekten kann der Beleuchtungslichtstrahl 3 auch durch das Objekt geführt werden. Zu diesen Zwecken werden nichtleuchtende Präparate ggf. mit einem geeigneten Farbstoff präpariert (nicht dargestellt, da etablierter Stand der Technik). Die in dem Objekt 15 vorhandenen Farbstoffe werden durch den Beleuchtungslichtstrahl 3 angeregt und senden Licht in einem ihnen eigenen charakteristischen Bereich des Spektrums aus. Dieses vom Objekt 15 ausgehende Licht definiert einen Detektionslichtstrahl 17. Dieser gelangt durch die Mikroskopoptik 13, die Scanoptik 12 und über das Scanmodul 7 zum Umlenkmittel 5, passiert dieses und gelangt über eine Detektionslochblende 18 auf mindestens einen Photosensor-Chip 19, der als CCD-Chip, EMCCD-Chip oder APD Array ausgeführt ist. Der vom Objekt 15 ausgehende bzw. definierte Detektionslichtstrahl 17 ist in Fig. 1 als gestrichelte Linie dargestellt. Im Photosensor-Chip 19 werden elektrische, von der Leistung des vom Objekt 15 ausgehenden Lichtes, abhängige Detektionssignale erzeugt. Da, wie bereits oben erwähnt, vom Objekt 15 Licht nicht nur einer Wellenlänge ausgesandt wird, ist es sinnvoll vor dem Photosensor-Chip 19 ein dispersives Element 20 vorzusehen. Das dispersive Element 20 spaltet den Detektionslichtstrahl spektral auf, so dass die einzelnen Wellenlängen des Detektionslichts räumlich spektral getrennt sind. Dem dispersiven Element 20 ist mindestens eine Linse 21 vorgeschaltet, die den Detektionslichtstrahl 17 aufweitet und parallel macht. Dem dispersiven Element 20 ist eine Detektoroptik 22 nachgeschaltet, die die spektral getrennten Strahlen 24, 25 des Detektionslichtstrahl 17 auf den Photosensor-Chip 19 fokussiert. Die spektral getrennten Strahlen unterscheiden sich hinsichtlich der Wellenlänge und treffen somit auf unterschiedliche Bereiche auf dem Photosensor-Chip 19. In der hier dargestellten Ausführungsform ist vor dem dispersiven Element 20 eine Aufweitungsoptik 23 vorgesehen Die Aufweitungsoptik ist derart ausgebildet, dass die numerische Apertur der Detektoroptik 22 unabhängig von der numerischen Apertur des Detektionslichtstrahls 17 an der Detektionslochblende 18 ist.

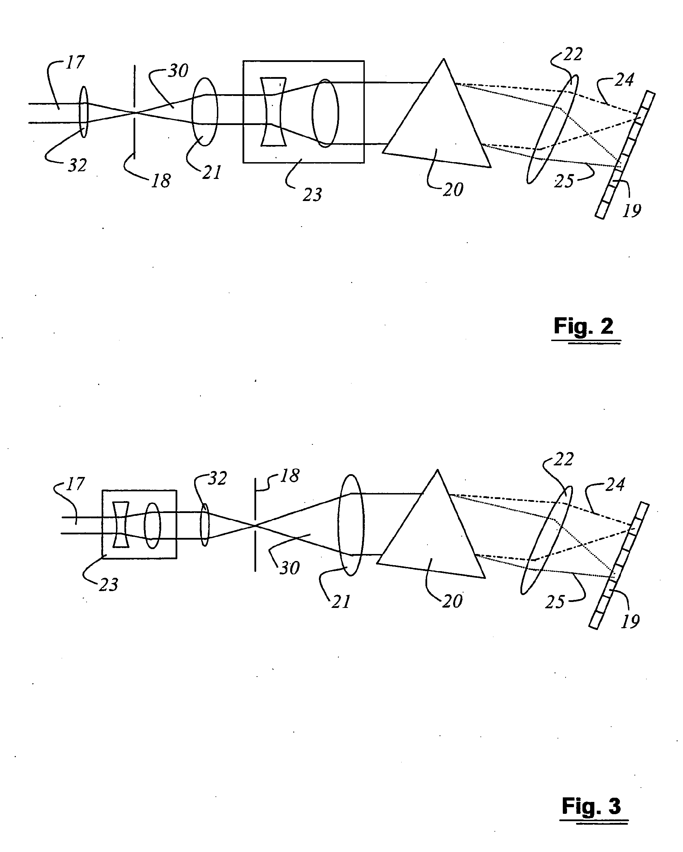

Fig. 2 zeigt eine schematische Detailansicht einer ersten Ausführungsform der Anordnung der Aufweitungsoptik 23 im Detektionslichtstrahl 17. Die Aufweitungsoptik 23 ist erforderlich, um kein Detektionslicht zu verlieren. Dabei ist der Querschnitt der Optik hinter der Detektionslochblende 18 so ausgelegt, dass auch bei maximalem Öffnungswinkel des Lichtkegels 30 hinter der Detektionslochblende 18 keine Überbeleuchtung auftritt, das heißt die Linsen hinter der Aufweitungsoptik 23 - gerade vollständig ausgeleuchtet sind. Bei einer fixen Optik würde das bedeuten, dass für Lichtkegel mit kleinem Öffnungswinkel die Linsen nicht vollständig ausgeleuchtet werden, und somit nicht die volle numerische Apertur des Systems ausgenutzt wird. Eine nicht vollständig ausgeleuchtete Optik im Detektionslichtstrahl führt letztendlich zu einer schlechteren Auflösung bzw. zu einer Reduzierung der Detektionseffizienz, bedingt durch einen größeren Fokus am Detektor. Diese reduzierte Auflösung ist bei kleineren Detektoren, insbesondere bei Detektorarrays, wie sie z.B. in Kombination mit einer spektralen Aufspaltung des Lichts eingesetzt werden, ein erheblicher Nachteil. Bei der in Fig. 2 dargestellten Ausführungsform ist die Aufweitungsoptik 23 hinter der Detektionslochblende 18 angeordnet. Durch eine Optik 32 mit fester Brennweite wird der Detektionslichtstrahl 17 auf die Detektionslochblende 18 abgebildet. Der von der Detektionslochblende 18 ausgehende divergierende Lichtkegel 30 wird mit einer weiteren Optik 21 parallelisiert. Anschließend trifft das Detektionslicht auf die Aufweitungsoptik 23. Durch die veränderbare Aufweitungsoptik 23 wird erreicht, dass die Fokusgröße am Detektor nicht von der Öffnung des Lichtkegels hinter der Detektionslochblende 18 abhängt.

Die Größe der Detektionslochblende 18 wird in Mikrometer gemessen. Die Auflösung im Konfokalmikroskop hängt von der Größe der Detektionslochblende 18 relativ zur numerischen Apertur des auf die Detektionslochblende 18 fokussierten Detektionslichtstrahl 17 ab. Die Auflösung wird in Airy-Einheiten gemessen, die mit folgender Gleichung

Ein und dieselbe Airy-Einheit kann also einer großen Detektionslochblende 18 mit einem Lichtkegel mit kleinem Öffnungswinkel entsprechen, oder einer kleinen Detektionslochblende 18 und einem Lichtkegel mit großem Öffnungswinkel. Das von der Aufweitungsoptik 23 austretende Detektionslicht 17 trifft auf das dispersive Element 20, dass das Detektionslicht spektral räumlich aufspaltet. Mit einer Detektoroptik 22 wird das spektral aufgespaltene Detektionslicht auf den Photosensor-Chip 15 abgebildet. Ziel ist es, bei gegebener maximaler Airy-Größe der Detektionslochblende 18 einen möglichst kleinen Spot am Photosensor-Chip 19 zu erhalten, so dass dieser optimal ausgeleuchtet wird und ein maximales Signal zu Rauschverhältnis erreicht wird. Die Spotgröße am Photosensor-Chip 19 ergibt sich aus der Größe der Detektionslochblende 18 und dem Abbildungsmaßstab der dazwischenliegenden Optik. Größere Anforderungen an den Abbildungsmaßstab der Optik stellt also eine große Öffnung der Detektionslochblende 18. Diese geht aber bei gegebener Auflösung des Konfokalmikroskops mit einem kleinen Öffnungswinkel hinter der Detektionslochblende einher. Gerade in diesem Fall wird also bei einer fixen Detektionsoptik nicht die vollständige numerische Apertur der Optik ausgenutzt. Die erfindungsgemäße veränderbare Aufweitungsoptik 23 sorgt dafür, dass unabhängig vom Öffnungswinkel des Lichtkegels hinter der Detektionslochblende 18 immer die maximale numerische Apertur der Detektoroptik 22 ausgenutzt wird. Damit kann gerade bei großen Detektionslochblenden 18 ein verbessertes Abbildungsverhältnis bei sonst gleicher Optik erreicht werden. Durch das optimierte Ausleuchten, wie z.B. einer Detektorzeile, wird in der zum Spektrum senkrechten Richtung die Quanteneffizienz und damit das Signal zu Rauschverhältnis des Detektors und in Richtung des Spektrums dessen spektrale Auflösung erhöht. Die Detektoroptik 22 kann also bei Verwendung einer Aufweitungsoptik 23 bei gleicher maximaler Spotgröße (Größe des Photosensor-Chips 19) mit Fokuslinsen größerer Brennweite realisiert werden. Eine große Brennweite der Fokuslinse ist besonders wichtig bei Detektoren, die hermetisch versiegelt sind und deshalb ein Deckglas benötigen. Bei diesen Detektoren muss durch das Deckglas auf die photosensitive Schicht des Photosensor-Chips 19 fokussiert werden.

Fig. 3 zeigt eine weitere Ausführungsform der Erfindung. Hier ist die Aufweitungsoptik vor der Detektionslochblende 18 angeordnet. Das von der Aufweitungsoptik 23 austretende Detektionslicht trifft auf eine feste Optik 32, die das Detektionslicht auf die Detektionslochbleride 18 fokussiert. Hinter der Detektionslochblende ist eine Optik 21 angeordnet, die den von der Detektionslochblende 18 ausgehenden Lichtkegel 30 parallelisiert und auf das dispersive Element 20 abbildet. Wiederum wir von der Detektoroptik 22 das räumlich aufgespaltene Detektionslicht 24 und 25 auf den Photosensor-Chip 19 abgebildet. Auch in der in Fig. 3 dargestellten Ausführungsform ergeben sich die gleichen Vorteile wie bereits in der Beschreibung zu Fig. 2 erwähnt.

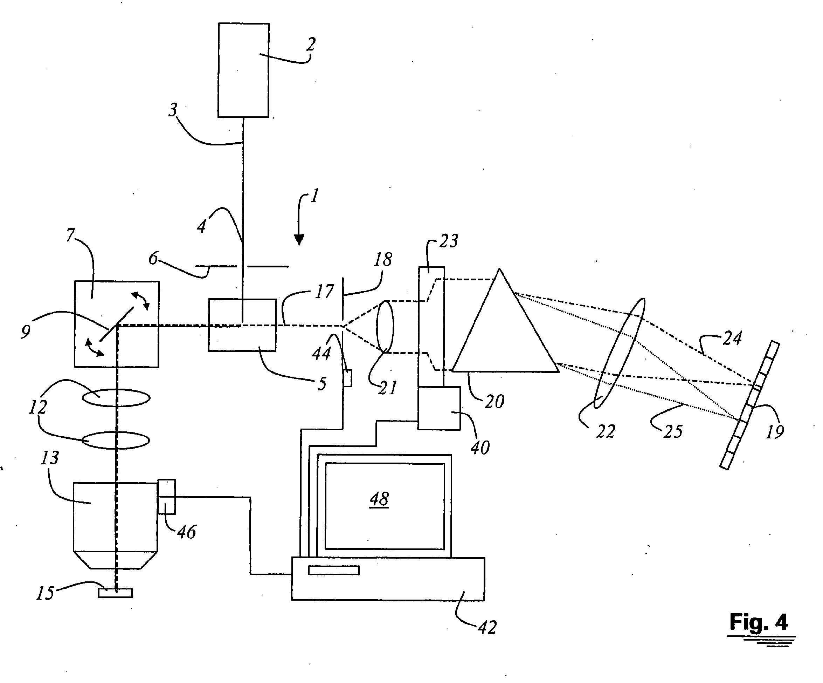

Fig. 4 zeigt eine schematische Darstellung der Aufweitungsoptik 23 in Form einer Zoomoptik, die mit mindestens einem Stellelement 40 verbunden ist. Einem Konfokalmikroskop ist eine Steuer- und Regeleinheit 42 zugeordnet, die in Verbindung mit dem Konfokalmikroskop dafür sorgt, dass eine automatische Anpassung der Aufweitungsoptik 23 an ein gerade verwendetes Objektiv 13 des Konfokalmikroskops und der eingestellten Größe der Detektionslochblende 18 erfolgt. Zur automatischen Anpassung der Aufweitungsoptik 23 kann die Detektionslochblende 18 mit einem Encoder 44 versehen sein, der die Größe der eingestellten Detektionslochblende 18 bestimmt. Ebenso kann das Objektiv 13 des Mikroskops mit einem Encoder versehen sein, damit die Art des gerade verwendeten Objektivs ermittelt werden kann. Die Größe der Einstellung der Detektionslochblende 18 oder des Objektivs 13 werden durch die Enconder 44 und 46 an die Steuer- und Regeleinheit 42 übermittelt. Anhand der übermittelten Größen bestimmt die Steuer- und Regeleinheit 42 eine Stellgröße für die Aufweitungsoptik 23 und übermittelt diese Stellgröße an das mit der Aufweitungsoptik 23 verbundene Stellelement 40. Ebenso kann mit der Steuer- und Regeleinheit 42 ein Display 48 verbunden sein, auf dem einem Benutzer das gerade von der Steuer- und Regeleinheit 42 verwendete Objektiv 13 des Konfokalmikroskops und die gerade eingestellte Größe der Detektionslochblende 18 angezeigt wird. Ebenso kann dem Benutzter auf dem Display 48 die erforderliche, manuelle Anpassung der Aufweitungsoptik 23 angezeigt werden.

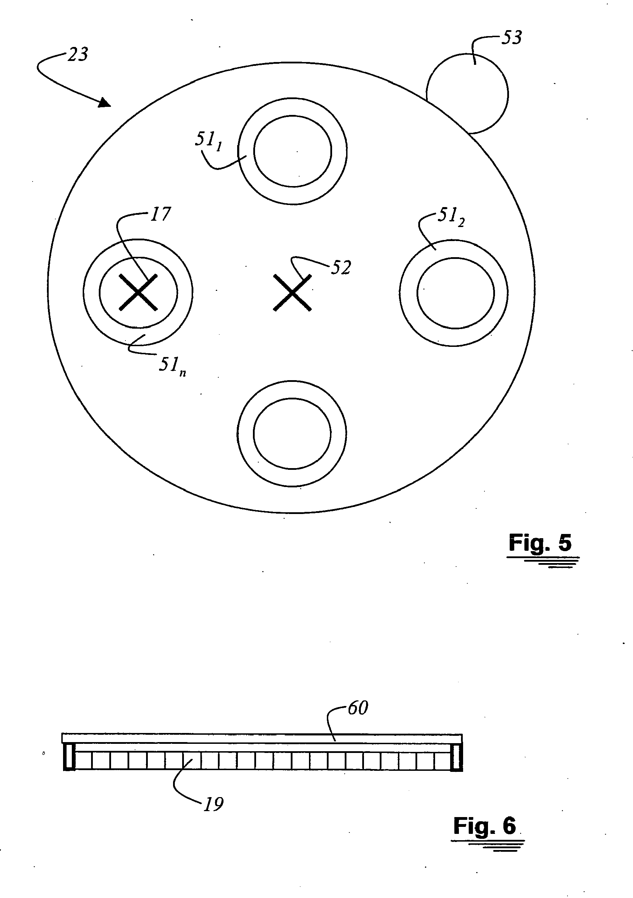

Fig. 5 zeigt eine schematische Ansicht einer Aufweitungsoptik 23, die aus mehreren unterschiedlichen Aufweitungsoptiken 51₁, 51₂, ... 51ₙ besteht. Aufweitungsoptik 23 ist in Form eines Revolvers ausgebildet, der mehrere Aufweitungsoptiken 51₁, 51₂, ... 51ₙ trägt. Die Aufweitungsoptik 23 ist um eine Achse 52 drehbar gelagert, so dass die unterschiedlichen Aufweitungsoptiken 51₁, 51₂, ... 51ₙ in den Detektionslichtstrahl 17 geschwenkt werden können. Die entsprechende Drehung der Aufweitungsoptik 23 kann z.B. durch ein Reibelement 53 erfolgen.

Fig. 6 zeigt eine Ausführungsform des Photosensor-Chips 19. Der Photosensor-Chip 19 ist mit einer Glasplatte 16 hermetisch versiegelt. Dadurch muss das spektral aufgespaltene Detektionslicht 24, 25 mit der Detektoroptik 22 durch die Glasplatte 60 hindurch auf den Photosensor-Chip 19 fokussiert werden. Der Photosensor-Chip 19 kann als CCD-Array, oder als EMCCD-Array, oder als APD-Array ausgebildet sein.

## Patentansprüche

1. Konfokalmikroskop, mit mindestens einer Lichtquelle (2), die einen Beleuchtungslichtstrahl (3) emittiert, der durch ein objecktiv (13) hindurch über eine Scaneinrichtung (7) eine Probe (15) punkt- bzw. zeilenweise beleuchtet, einer Detektionslochblende (18), die in einem von der Probe (15) ausgehenden Detektionslichtstrahl (17) vorgesehen ist, einem dispersiven Element (20), das den von der Probe (15) ausgehenden Detektionslichtstrahl (17) räumlich spektral aufspaltet, um für eine Detektoroptik (22) einen spektral aufgespaltenen Detektionslichtstrahl (17) zu erzeugen, die diesen auf einen Photosensor-Chip (19) abbildet, wobei die Detektionslochblende (18) in Richtung des Detektionslichtstrahls (17) vor dem dispersiven Element (20) angeordnet is wobei mindestens eine Aufweitungsoptik (23) ebenfalls vor dem dispersiven Element (20) in Richtung des Detektionslichtstrahls (17) angeordnet ist, **dadurch gekennzeichnet, dass** ein Encoder (46) angeordnet ist, mit dessen Hilfe die Art des gerade verwendeten Objektives (13) ermittelt werden kann, und dass dem Konfokalmikroskop eine Steuer- und Regeleinheit (42) zugeordnet ist, mit deren Hilfe automatisch eine Anpassung der Aufweitungsoptik (23), die mit einem Stellelement (40) verbunden ist, an das gerade verwendete Objektiv (13) des Konfokalmikroskops und der eingestellten Größe der Detektionslochblende (18) erfolgen kann, so dass die numerische Apertur der Detektoroptik (22) unabhängig von der numerischen Apertur des Detektionslichtstrahls (17) an der Detektionslochblende (18) ist.

2. Konfokalmikroskop nach Anspruch 1, **dadurch gekennzeichnet, dass** die Aufweitungsoptik in Richtung des Detektionslichtstrahls (17) der Detektionslochblende (18) nachgeordnet ist.

3. Konfokalmikroskop nach Anspruch 1, **dadurch gekennzeichnet, dass** die Aufweitungsoptik (23) in Richtung des Detektionslichtstrahls (17) vor der Detektionslochblende (18) angeordnet ist.

4. Konfokalmikroskop nach einem der Ansprüche 1 bis 3, **dadurch gekennzeichnet, dass** die Aufweitungsoptik (23) als variable Zoomoptik ausgebildet ist.

5. Konfokalmikroskop nach einem der Ansprüche 1 bis 3, **dadurch gekennzeichnet, dass** die Aufweitungsoptik (23) aus mehreren unterschiedlichen Aufweitungsoptiken (51₁, 51₂, ... 51ₙ) besteht, die sich hinsichtlich des Aufweitungsgrades unterscheiden und in den Detektionslichtstrahl (17) einbringbar sind.

6. Konfokalmikroskop nach Anspruch 5, **dadurch gekennzeichnet, dass** die mehreren unterschiedlichen Aufweitungsoptiken (51₁, 51₂, ... 51ₙ) motorisch in den Detektionslichtstrahl (17) einbringbar sind.

7. Konfokalmikroskop nach einem der Ansprüche 1 bis 6, **dadurch gekennzeichnet, dass** der Photosensor-Chip (19) ein CCD-Array oder ein EMCCD-Array oder ein APD-Array ist.

8. Konfokalmikroskop nach einem der Ansprüche 1 bis 7, **dadurch gekennzeichnet, dass** der Photosensor-Chip (19) hermetisch durch eine Glasscheibe (60) versiegelt ist.

9. Verfahren zur Detektion mit einem Konfokalmikroskop, **gekennzeichnet durch** die folgenden Schritte:
• dass eine Probe (15) mit mindestens einer Lichtquelle (5), **durch** ein Objektiv (13) hindurch mittels einer Scaneinrichtung Punktweise bzw. Zeilenweise beleuchtet wird;
• dass ein von der Probe (15) ausgehender Detektionslichtstrahl (17) über eine Detektionslochblende (18) auf ein dispersives Element (20) gerichtet wird, wobei der von der Probe (15) ausgehende Detektionslichtstrahl (17) räumlich spektral aufspalteten wird;
• dass der spektral aufgespaltene Detektionslichtstrahl (17) von einer Detektoroptik (22) auf einen Photosensor-Chip (19) abgebildet wird;
• dass mit Hilfe eines Encoders (46) die Art des gerade verwendeten Objektives (13) ermittelt wird;
• dass eine mit einem Stellelement (40) verbundene Aufweitungsoptik vor dem dispersiven Element (20) im Detektionslichtstrahl (17) vorgesehen wird;
• dass mit Hilfe einer Steuer- und Regeleinheit (42) automatisch eine Anpassung der Aufweitungsoptik (23) an ein gerade verwendetes Objektiv (13) des Konfokatmtkroskops und der eingestellten Größe der Detektionslochblende (18) durchgeführt wird, so dass die numerische Apertur der Detektoroptik (22) unabhängig von der numerischen Apertur des Detektionslichtstrahls (17) an der Detektionslochblende (18) ist.

10. Verfahren nach Anspruch 9, **dadurch gekennzeichnet, dass** die Aufweitungsoptik (23) in Richtung des Detektionslichtstrahls (17) der Detektionslochblende (18) nachgeordnet wird.

11. Verfahren nach Anspruch 10, **dadurch gekennzeichnet, dass** die Aufweitungsoptik (23) in Richtung des Detektionslichtstrahls (17) vor der Detektionslochblende (18) angeordnet wird.

12. Verfahren nach einem der Ansprüche 9 bis 11, **dadurch gekennzeichnet, dass** die Aufweitungsoptik als Zoomoptik ausgebildet ist.

13. Verfahren nach einem der Ansprüche 9 bis 11, **dadurch gekennzeichnet, dass** die Aufweitungsoptik aus mehreren unterschiedlichen Aufweitungsoptiken besteht, die sich hinsichtlich des Aufweitungsgrades unterscheiden und in den Detektionsstrahl eingebracht werden.

14. Verfahren nach Anspruch 13, **dadurch gekennzeichnet, dass** die mehreren unterschiedlichen Aufweitungsoptiken motorisch in den Detektionsstrahl eingebracht werden.

15. Verfahren nach einem der Ansprüche 9 bis 14, **dadurch gekennzeichnet, dass** der Photosensor-Chip ein CCD-Array oder ein EMCCD-Array oder ein APD-Array ist.

16. Verfahren nach einem der Ansprüche 9 bis 14, **dadurch gekennzeichnet, dass** der Photosensor-Chip hermetisch durch eine Glasscheibe versiegelt ist, durch die der spektral aufgespaltene Detektionslichtstrahl auf den Photosensor-Chip fokussiert wird.

## Claims

1. A confocal microscope with at least one light source (2) which emits an illumination light beam (3) that illuminates a sample (15) in a point-by-point or line-by-line manner through an objective (13) via a scanning device (7), a detection pinhole diaphragm (18) which is provided in a detection light beam (17) emanating from the sample (15), a dispersive element (20) which spatially spectrally splits the detection light beam (17) emanating from the sample (15) to generate a spectrally split detection light beam (17) for a detection optical system (22) which images this detection light beam onto a photosensor chip (19), the detection pinhole diaphragm (18) being arranged upstream of the dispersive element (20) in the direction of the detection light beam (17), at least one expanding optical system (23) being likewise arranged upstream of the dispersive element (20) in the direction of the detection light beam (17), **characterized in that** an encoder (46) is arranged with the aid of which the type of the currently used objective (13) can be determined and **in that** the confocal microscope has a control and regulating unit (42) associated therewith, with the aid of which an adaptation of the expanding optical system (23), which is connected to an actuating element (40), to the currently used objective (13) of the confocal microscope and the set size of the detection pinhole diaphragm (18) can automatically take place so that the numerical aperture of the detection optical system (22) is independent of the numerical aperture of the detection light beam (17) at the detection pinhole diaphragm (18).

2. The confocal microscope according to claim 1, **characterized in that** the expanding optical system is arranged downstream of the detection pinhole diaphragm (18) in the direction of the detection light beam (17).

3. The confocal microscope according to claim 1, **characterized in that** the expanding optical system (23) is arranged upstream of the detection pinhole diaphragm (18) in the direction of the detection light beam (17).

4. The confocal microscope according to one of the claims 1 to 3, **characterized in that** the expanding optical system (23) is designed as a variable zoom optics.

5. The confocal microscope according to one of the claims 1 to 3, **characterized in that** the expanding optical system (23) is comprised of several different expanding optical systems (51₁, 51₂, ... 51ₙ) which differ from one another with respect to their degree of expansion and are movable into the detection light beam (17).

6. The confocal microscope according to claim 5, **characterized in that** the several different expanding optical systems (51₁, 51₂, ... 51ₙ) are moveable into the detection light beam (17) by means of a motor.

7. The confocal microscope according to one of the claims 1 to 6, **characterized in that** the photosensor chip (19) is a CCD array or an EMCCD array or an APD array.

8. The confocal microscope according to one of the claims 1 to 7, **characterized in that** the photosensor chip (19) is hermetically sealed by a glass cover (60).

9. A method for detection with a confocal microscope, **characterized by** the following steps:
- that a sample (15) is illuminated with at least one light source (5) through an objective (13) by means of a scanning device in a point-by-point or line-by-line manner,
- that a detection light beam (17) emanating from the sample (15) is directed via a detection pinhole diaphragm (18) onto a dispersive element (20), the detection light beam (17) emanating from the sample (15) being spatially spectrally split,
- that the spectrally split detection light beam (17) is imaged by a detection optical system (22) onto a photosensor chip (19),
- that with the aid of an encoder (46) the type of the currently used objective (13) is determined,
- that an expanding optical system connected to an actuating element (40) is provided upstream of the dispersive element (20) in the detection light beam (17),
- that with the aid of a control and regulating unit (42) an adaptation of the expanding optical system (23) to a currently used objective (13) of the confocal microscope and the set size of the detection pinhole diaphragm (18) is automatically performed so that the numerical aperture of the detection optical system (22) is independent of the numerical aperture of the detection light beam (17) at the detection pinhole diaphragm (18).

10. The method according to claim 9, **characterized in that** the expanding optical system (23) is arranged downstream of the detection pinhole diaphragm (18) in the direction of the detection light beam (17).

11. The method according to claim 10, **characterized in that** the expanding optical system (23) is arranged upstream of the detection pinhole diaphragm (18) in the direction of the detection light beam (17).

12. The method according to one of the claims 9 to 11, **characterized in that** the expanding optical system is designed as a zoom optics.

13. The method according to one of the claims 9 to 11, **characterized in that** the expanding optical system is comprised of several different expanding optical systems which differ from one another with respect to their degree of expansion and are moved into the detection beam.

14. The method according to claim 13, **characterized in that** the several different expansion optical systems are motorically brought into the detection beam.

15. The method according to one of the claims 9 to 14, **characterized in that** the photosensor chip is a CCD array or an EMCCD array or an APD array.

16. The method according to one of the claims 9 to 14, **characterized in that** the photosensor chip is hermetically sealed by a glass cover through which the spectrally split detection light beam is focused onto the photosensor chip.

## Revendications

1. Microscope à foyer commun, comprenant au moins une source de lumière (2), qui émet un faisceau de lumière d'éclairage (3), lequel éclaire un échantillon (15) de façon ponctuelle ou par ligne à travers un objectif (13) au moyen d'un dispositif de balayage (7), un diaphragme à trou de détection (18), qui est prévu dans un faisceau de lumière de détection (17) partant de l'échantillon (15), un élément (20) dispersif, qui subdivise au plan spectral dans l'espace le faisceau de lumière de détection (17) partant de l'échantillon (15), afin de générer un faisceau de lumière de détection (17) subdivisé au plan spectral pour une optique de détecteur (22), qui reproduit ce faisceau sur une puce du photocapteur (19), le diaphragme à trou de détection (18) étant disposé en direction du faisceau de lumière de détection (17) en amont de l'élément (20) dispersif, au moins une optique d'élargissement (23) étant disposée également en amont de l'élément (20) dispersif en direction du faisceau de lumière de détection (17), **caractérisé en ce qu'**un encodeur (46) est installé, qui permet de déterminer la nature de l'objectif (13) précisément utilisé, et **en ce qu'**une unité de commande et de réglage (42) est attribuée au microscope à foyer commun, unité qui permet d'effectuer automatiquement une adaptation de l'optique d'élargissement (23), qui est reliée à un élément de réglage (40), à l'objectif (13) précisément utilisé du microscope à foyer commun et à la grandeur réglée du diaphragme à trou de détection (18), de sorte que l'ouverture numérique de l'optique de détecteur (22) est indépendante de l'ouverture numérique du faisceau de lumière de détection (17) sur le diaphragme à trou de détection (18).

2. Microscope à foyer commun selon la revendication 1, **caractérisé en ce que** l'optique d'élargissement est disposée en aval du diaphragme à trou de détection (18) en direction du faisceau de lumière de détection (17).

3. Microscope à foyer commun selon la revendication 1, **caractérisé en ce que** l'optique d'élargissement (23) est disposée en amont du diaphragme à trou de détection (18) en direction du faisceau de lumière de détection (17).

4. Microscope à foyer commun selon l'une quelconque des revendications 1 à 3, **caractérisé en ce que** l'optique d'élargissement (23) est conçue sous forme d'optique de zoom variable.

5. Microscope à foyer commun selon l'une quelconque des revendications 1 à 3, **caractérisé en ce que** l'optique d'élargissement (23) est constituée de plusieurs optiques d'élargissement (51₁, 51₂, ... 51ₙ) différentes, qui se différencient en ce qui concerne le degré d'élargissement et peuvent être introduites dans le faisceau de lumière de détection (17).

6. Microscope à foyer commun selon la revendication 5, **caractérisé en ce que** les plusieurs optiques d'élargissement (51₁, 51₂, ... 51ₙ) différentes peuvent être introduites par moteur dans le faisceau de lumière de détection (17).

7. Microscope à foyer commun selon l'une quelconque des revendications 1 à 6, **caractérisé en ce que** la puce du photocapteur (19) est un dispositif CCD ou un dispositif EMCCD ou un dispositif APD.

8. Microscope à foyer commun selon l'une quelconque des revendications 1 à 7, **caractérisé en ce que** la puce du photocapteur (19) est scellée hermétiquement par une vitre (60).

9. Procédé de détection avec un microscope à foyer commun, **caractérisé par** les étapes suivantes:
• en ce qu'un échantillon (15) est éclairé de façon ponctuelle ou par ligne avec au moins une source de lumière (5), à travers un objectif (13) au moyen d'un dispositif de balayage;
• en ce qu'un faisceau de lumière de détection (17) partant de l'échantillon (15) est dirigé au moyen d'un diaphragme à trou de détection (18) sur un élément (20) dispersif, le faisceau de lumière de détection (17) partant de l'échantillon (15) étant subdivisé dans l'espace au plan spectral;
• en ce que le faisceau de lumière de détection (17) subdivisé au plan spectral est reproduit par une optique de détecteur (22) sur une puce du photocapteur (19);
• en ce que la nature de l'objectif (13) précisément utilisé est déterminée à l'aide d'un encodeur (46);
• en ce qu'une optique d'élargissement reliée à un élément de réglage (40) est prévue en amont de l'élément (20) dispersif dans le faisceau de lumière de détection (17);
• en ce qu'une adaptation de l'optique d'élargissement (23) à un objectif (13) précisément utilisé du microscope à foyer commun et de la grandeur réglée du diaphragme à trou de détection (18) est effectuée automatiquement à l'aide d'une unité de commande et de réglage (42), de sorte que l'ouverture numérique de l'optique de détecteur (22) est indépendante de l'ouverture numérique du faisceau de lumière de détection (17) sur le diaphragme à trou de détection (18).

10. Procédé selon la revendication 9, **caractérisé en ce que** l'optique d'élargissement (23) est disposée en aval du diaphragme à trou de détection (18) en direction du faisceau de lumière de détection (17).

11. Procédé selon la revendication 10, **caractérisé en ce que** l'optique d'élargissement (23) est disposée en amont du diaphragme à trou de détection (18) en direction du faisceau de lumière de détection (17).

12. Procédé selon l'une quelconque des revendications 9 à 11, **caractérisé en ce que** l'optique d'élargissement est conçue sous forme d'optique à zoom.

13. Procédé selon l'une quelconque des revendications 9 à 11, **caractérisé en ce que** l'optique d'élargissement est constituée de plusieurs optiques d'élargissement différentes, qui se différencient en ce qui concerne le degré d'élargissement et sont introduites dans le faisceau de détection.

14. Procédé selon la revendication 13, **caractérisé en ce que** les plusieurs optiques d'élargissement différentes sont introduites par moteur dans le faisceau de détection.

15. Procédé selon l'une quelconque des revendications 9 à 14, **caractérisé en ce que** la puce du photocapteur est un dispositif CCD ou un dispositif EMCCD ou un dispositif APD.

16. Procédé selon l'une quelconque des revendications 9 à 14, **caractérisé en ce que** la puce du photocapteur est scellée hermétiquement par une vitre à travers laquelle le faisceau de lumière de détection subdivisé au plan spectral est focalisé sur la puce du photocapteur.
